# EUROPEAN PATENT SPECIFICATION

(11) **EP 3 511 085 B1**
(45) Date of publication and mention of the grant of the patent: **14.08.2024**
(21) Application number: 18151889.5
(22) Date of filing: 16.01.2018
(51) Int. Cl.: B21D 11/00, B21D 53/88, B62D 21/00, B62D 25/00, B21D 47/00

(54) **BEND-FORMED LOAD-BEARING STRUCTURE OF A PASSENGER CAR**
BIEGEUMGEFORMTE TRAGSTRUKTUR EINES PERSONENKRAFTWAGENS
STRUCTURE PORTEUSE D'UNE VOITURE DE TOURISME FORMÉE PAR PLIAGE

(43) Date of publication of application: 17.07.2019
(73) Proprietor: Outokumpu Oyj, 00180 Helsinki (FI)
(72) Inventor: Fröhlich, Thomas, 40878 Ratingen (DE); Lindner, Stefan, 47877 Willich (DE); Eren, Selcuk, 41469 Neuss (DE)

(56) References cited:
- EP-A2- 0 295 662
- WO-A1-2009/086329
- FR-A1- 2 687 974
- JP-A- 2009 019 229
- US-A- 4 489 976

## Description

The present invention relates to a method, for manufacturing metallic flat materials to a cost-effective load-bearing structure of a vehicle and the usage of it. As the main forming manufacturing method the bend forming according to DIN EN ISO 8586 is used.

The manufacturing of passenger cars is characterized by an intensive usage of the manufacturing processes forming, welding and cutting. Thereby, tensile compressive forming or tensile forming methods like deep drawing, hydroforming or embossing are dominating the vehicle manufacturing of passenger cars. They can be characterized as suitable for high quantities and fast cycle times and are therefore used mainly in the area of automotive car body engineering. On the other side, the necessary forming tools result in high investment costs and the necessity of having a corresponding forming press. Usually, it can be used just for one kind of component and component geometry at the same time. Because of the last aspect, a high number of forming tools are needed to build up all components for a vehicle or further for different vehicle series. That implies also a high value for fixed capital during big industrial vehicle manufacturing and need corresponding storage area. Further, the forming tools are heavy in point of weight (sometimes ≥ 2 t) wherefore support by machines like cranes is mandatory needed. This additional machine time, costs and availability must also be taking into account. The tool size, especially for outer-skin parts, can be reached more than 5.0 meters in one direction and covers at the end investment costs in the range of tens of millions [€] (https://www.thyssenkrupp.com/de/newsroom/pressemeldungen/press-release-131552.html). State of the art automotive car bodies are designed out of 550 single components. The consequence is also a high demand for welding work and different welding technologies. After the assembly of the formed parts to a car body, a paint shop is state of the art the next production step where the car bodies are painted with a cathodic dip coating. Also for this, high investment and production costs are necessary. The described way of manufacturing vehicles, here with a special view to automotive passenger cars, is well-established for big OEMs (Original Equipment Manufacturer).

Currently, new trends like alternative powertrain solutions, car sharing or autonomous driving involve new design concepts for passenger cars but also new manufacturers of it with the necessity of building-up new plants. Especially new manufacturers like start-ups, spin-off companies or small OEMs don't have the investment capital for building-up elaborate and extensive manufacturing processes like a paint shop but especially forming presses with a high number of necessary forming tools. Furthermore, the need in regions like Asia or Africa for affordable vehicles for their population increases. Additionally, simple but flexible and space-saving vehicles are in demand for high-urbanized areas like megacities. To fulfill the local need for passenger cars, having the necessary starting capital but without high development and investment costs as well as time and furthermore without building-up big plants, franchising concepts could be one solution for the future to manufacture vehicles in a short-time period. But new manufacturing concepts for passenger cars are necessary. The example of passenger cars can be adapted also for other land based transportation systems for passengers and freight like commercial or agricultural vehicles.

From the WO patent application 2017177677A1 is a folding electric bicycle known whereby folding in this case means a folding mechanism to fold the different parts of the bicycle to a small-volume object which can be easy handled or stored in a space-saving manner. Contrary to the present invention it is a kind of a separable connection, whereby the original function (driving) gets lost during folding of the parts. Further it seems to be manufactured with other manufacturing methods than the present invention. Folding in the definition of the present invention means to fold a structure during manufacturing, not during application usage.

Further vehicles including alternative chassis and load bearing structures are described in EP 0295 662, WO 2009/086329, FR 2 687 974, forming the basis for the preambles of claims 1 and 8, US 4 489 976 and JP 2009 019229.

Therefore, the object of the present invention is to eliminate some drawbacks of the prior art and to achieve a lightweight and cost-effective load-bearing structure for passenger cars manufactured with metallic flat materials and using as the main forming procedure the bend forming according to DIN 8586. That means bend forming is used ≥50% of all forming operations for the structure. The metallic flat material is a high strength steel with a yield strength R_{p0.2} ≥ 400MPa and a bending angle α ≥ 90° at the same time.

The target of the present invention is to offer a low-invest production method with a least possible number of components at the same time by using a folding-box-like load-bearing structure as a superordinate operating principle. With such a method used for a consequent design of a load-bearing structure, flat metallic materials are competitive in relation to additive manufacturing and 3D-printing.

In the present invention, the bend forming according to DIN 8586 is used as the main forming procedure. The different bending operations results in a folding-box-like structure which can be used as a load-bearing structure. Thereby the tooling with a linear or a rotating tool movement can be used for different and flexible forming operations to bend in one or different steps a flat metallic material up to 180° bending angle to a complex component integrating different functions and reducing the number of total car body components and therefore the necessary welding work. With this, one machine can be used for different and actual-needed component manufacturing and furthermore also for rework, redesign or prototypes. The simple way of manufacturing works as a benefit especially for ramp-ups, small series, vehicles with a high variant diversity or franchised-based vehicle systems.

Bend forming (or also called "bending") is defined as a forming method for which bending load is dominating. Thereby bending stresses are affected inside the forming zone. In more detail, the bending of flat metallic materials can be described as the turning down of one surface part related to the remaining part. As sub-procedures of bend forming, procedures like beading, edging, flanging, free bending, swivel bending or roll bending fulfill the method of the present invention. Hereinafter, the bending at the edge of a flat sheet with a bending angle of 90° is named as standing seam, whereas the bending of ≈180° is just named "seam" ("turnover" is also a common definition). One further advantage of the bend forming is the flexible usage of tools: a fast tool change of the light bending tools is possible for at least one person without support from cranes

The initial metallic material is a flat material with a thickness t ≤ 6.0 mm, more preferably t ≤ 3.0 mm and can be executed as a coil, strip, sheet, plate or a panel. With a preferred cutting by laser, water jet or mechanical, also pre-assembled formed shapes are possible. Thereby the cutting can be performed in a way, that all sheets for the later bend forming are nested in a way to have the lowest possible scrap and a high material yield. The benefit of this way of manufacturing, especially for franchising vehicle systems, is the cheaper, easier and more effective transport of the materials to the final place where the load-bearing structure is finally assembled together: Instead of delivering big formed components from a supplier or another press plant to the final assembling plant, (pre-assembled) flat sheets are delivered to it where just a bend forming machine is necessary. The transport, especially over different continents, shows a degree of efficiency nearly to 100%, no "air" is transported related to formed components. A fast and local ramp-up of new plants, companies or franchise holders is possible without high investments before.

With complex bend-formed sheets joint to a load-bearing structure of a passenger car, it is possible to equalize the disadvantage of flat sheets in comparison to aluminum extruded profiles or die-cast-aluminum components in this application field. An extensive use of such aluminum extruded profiles for passenger cars is pointed out as one example in the US patent application 2014327274A1. After bend forming, joining processes, preferably thermal joining processes like welding, are used to close similar bend-formed edges, components or also to join the different bend-formed sheets to the final load-bearing structure. The method, use or a profile of the present invention makes it also possible to reduce the welding work but also the number of different used welding technologies for one load-bearing structure. Therefore again, the investment costs are reduced. More simple clamping devices can be used to join different bend-formed components. As a preferably design just one welding method in a lap joint configuration is utilized like the resistance spot welding in a two, maximum three-sheet configuration. With this approach, a nesting of the bend-formed components to folding-box-like load-bearing structure is possible. A preferably design of present invention is to introduce short bending beads cross to the main bending direction (angle) to stiffen the load-bearing structure also into other load directions. Another design method preferably for the present invention is to include slots during cutting into which a similar part or different bend-formed components could be interlocked. With this kind of "plug system" the following welding can be executed easier and without further clamping devices, it is positioned for this process step, but also the stiffness of the complete load-bearing structure can be increased. Beside the bend forming of flat sheets, it is of course possible to add for different parts also bend-formed tubes, rods or hollow bodies. This is suitable in a case, where the bending machine is available in one plant and the mentioned product forms can add stiffness benefits to the load-bearing structure, e.g. bended tubes as a-pillars, apart from the bend-formed car body with flat materials.

To fulfill crash-relevant requirements for passenger cars, the bend forming must be performed in a way that a multilayer arrangement between the impact and the crash-safety zone is ensured, e.g. with a nested or an interlaced design. This can be realized on the one hand by bend forming one sheet in a singular or with different steps to a bending angle of nearly 180°. On the otherhand, the mentioned before nesting into slits can be also or additional used. Furthermore, it is possible to work out bend-formed parts in a spring design and to integrate those "springs" into crash-relevant zones by insertion, welding or stapling with the other load-bearing structure. This design can be realized in form of a bend-formed crumble-box. Regarding to that kind of design the position can be settled with a bend-formed sheet working as a distance element.

One preferred embodiment for crash-relevant areas is to use at least two bend-formed profiles, manufactured with the method of the present invention, within a transversal arrangement. Transversal means in the case of the present invention that at least two bend-formed structures have a mutual position to one another and are joint in a lap-joint configuration to each other, preferred performed as a joint design against rotation and torsion. With this usage of bend-formed profiles, the load-bearing structure can be increased in stiffness without the intensive usage of material. A stiff but lightweight construction can be reached.

Beside the usage of bend forming flat metallic materials as the main forming procedure (≥50%), it is additionally possible to use also tubes or celeries by bend forming as an addition if availability, price and design concepts allows to integrate them. For special parts like pillars or as reinforcement elements (e.g. inside the rocker panel area), bend-formed tube or celery structures can increase the stiffness of the load-bearing structure.

One further preferred embodiment of the present invention it to minimize the scrap of the used flat metallic materials by using the remnants because of cutting as additional reinforcement and stiffener elements within at least one bend-formed load-bearing structure. For this, the remnant sheets must be inserted into the structure and then joint to it.

The method of the present invention works suitably for passenger cars with alternative powertrains instead of combustion engines. As one kind, electric drive vehicles are using an electric drive combined with an entrained energy storage (like battery modules) as a drive concept. Depending on the respective drive concept electric drive vehicles can be divided into Battery Electric Vehicles (BEV) using purely electric power, Hybrid Electric Vehicles (HEV), Plug-in Hybrid Electric Vehicles (PHEVs) or Range Extended Electric Vehicles (REEV) combining an electric engine with combustion motor. Also Fuel Cell Vehicles (FCV) or Fuel Cell Hybrid Vehicles (FCHV), where the chemical stored energy in the form of hydrogen is changed into electric energy, are one additional group of electric vehicles. In general, the battery packs for electric vehicles are suffering under the heavy weight of the batteries what has a direct impact ona lower range of the electric vehicles which has in turn a lower acceptance of buyers. The battery compartment to protect the different battery modules can also be executed as a folding-box-like load-bearing structure by using the method of the present invention. This is possible as a separate part or directly integrated into the load-bearing structure of the passenger car. The battery compartment is located at the underbody area of a vehicle because of its weight and the therefore influencing driving behavior. Therefore, one special challenge of battery electric vehicles is the underbody impact in the case that a sharp-pointed object penetrates the battery compartment and destroys the batteries. With the method of the present invention a bend-formed folding structure can be performed to protect the underbody. One preferably design is a zigzag-profile to create a slipping of the impactor. With the method, use or a profile of the present invention the battery compartment can be carried out as an interchangeable system, a so-called exchangeable battery. In this case, at least one side is fixed as a removable connection e.g. with screws, plug connectors, pin or bolt connections. Moreover, it is possible to integrate sensors for vibration, stress, position or movement measurement inside the bend-formed load-bearing structure as well as into single bend-formed parts as condition monitoring.
- The most suitable application field for the method of the present invention is a car body of a so-called L7E-vehicle class passenger car which is defined by the European Union (standard 2007/46/EG) as a four-wheeled motor vehicle with an empty weight under or equal 400kg for passenger cars. For goods transportation, the limit is defined with 550kg. The weight limit does not include the batteries inside the electric drive vehicles. A car body with the following dimensions can be created as a preferred embodiment of the present invention: Width ≤ 1500 mm, more preferably ≤ 1250 mm
- Length ≤ 2000 mm, more preferably ≤ 1750 mm

With adjustment and scaling the present invention also works for other land-based automotive vehicles like electric busses, electric commercial vehicles, electric taxis or vehicles for parcel delivery. Furthermore, autonomous driving concepts, e.g. self-driving systems (often called "people mover") at airports, exhibition centers, stadiums or multifunctional arenas, can be easily performed with low-costs and fast set-up as a bend-formed load-bearing structure.

The method of the present invention is suitable for all flat metallic materials. With the target to enable a method without high investment costs, a fast ramp-up or prototyping and high flexibility, flat stainless steels, more preferably strain-hardening austenitic stainless steels, offer the highest potential to the invention. Stainless steels can be mainly characterized by their corrosion resistance. As a result, the load-bearing structure can be used with a blank metallic surface, the natural and repassivating chromium-oxid passivation-layer surface of stainless steels, and without an additional painting or cathodic dip coating. The upset and usage of a paint-shop is therefore not necessary. As an ideal embodiment of the present invention steels are used which have a yield strength R_{p0.2} ≥ 400 MPa and a bending angle α ≥ 90° at the same time to fulfill on the one side lightweight demands and crash requirements and on the other side the possibility of bend forming. Most stainless steels, especially the strain-hardening austenitic grades, but also the Duplex stainless steels, meet these requirements. Concurrently, austenitic stainless steels show a high level of energy absorption and can be used as spring steels what offer further benefits to a bend-formed load-bearing structure of a land-based vehicle or attached or pulled structure of it. Another stainless steel-option can be martensitic stainless steels which can be used as air-hardeners for hot-forming or press-hardening to reach high-strength properties. At the same time, they offer after an annealing step a high-enough ductility to bend forming bending angles ≥ 90°. That means that such martensitic stainless steels can be hot-formed in flat sheet condition and after delivery to the place of destination bend-formed to a load-bearing structure. Again, extensive machinery local at the place of manufacturing is not necessary with all before described benefits. Further the recycling aspect is a huge benefit of this material group: Stainless steels can be melted within an electric arc furnace and used again over decades. Also steel-polymer-composite structures, often called sandwich structures, like mentioned as weldable solution within the WO2016097186A1, fulfill the described requirements and can be used in bend-formed load-bearing structures as metallic flat materials.

Depending on the design of the folding-box-like structure, costs and availability of such product forms, also tailored welded or flexible rolled flat metallic materials can be sued to further increase properties like structure stiffness, lightweight or crash resistance.

Thereby it is not necessary, but to favor in point of franchising and logistics, to use one single material for the load-bearing structure of the land-based automotive vehicle or attached or pulled structure of it. With regard to material costs, necessary thicknesses and strength levels, the method of the present invention works also suitable as a multi-material-design structure whereby multi-material-design means the usage of different flat metallic materials in this case.

The present invention is illustrated in more details referring to the following drawings where
Fig. 1 shows one embodiment of the invention schematically seen from the top view,
Fig. 2 shows another embodiment of the invention schematically seen as a view of one assembling state,
Fig. 3 shows further another embodiment of the invention schematically seen as a view of another assembling state.

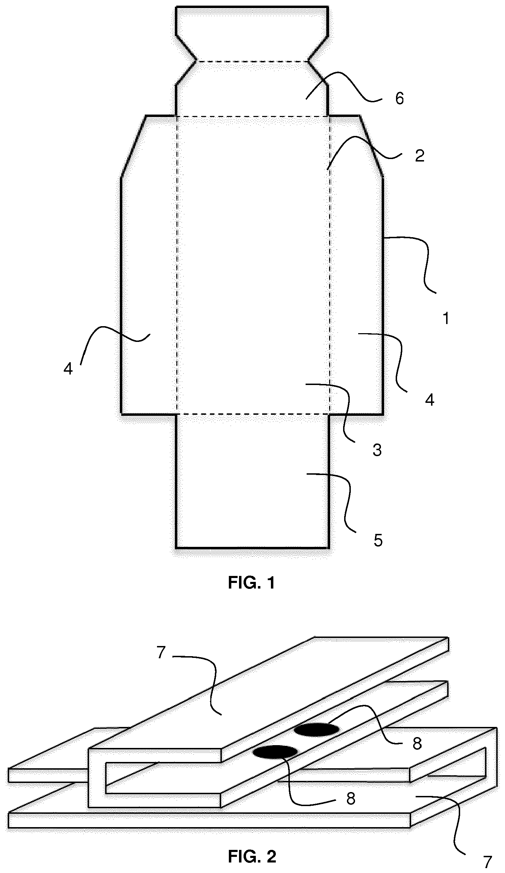

Fig. 1 illustrates the flat metallic material (1) after a preparatory cutting step before bend forming whereby the dashed lines (2) shows the areas of bend forming (bend axis), because of which the load-bearing structure can be classified into a passenger zone (3), side panels (4), rear wall (5) and front panel (6).

Fig. 2 illustrates transversal arrangement of at least two bend-formed structures (7) within a lap-joint configuration (8).

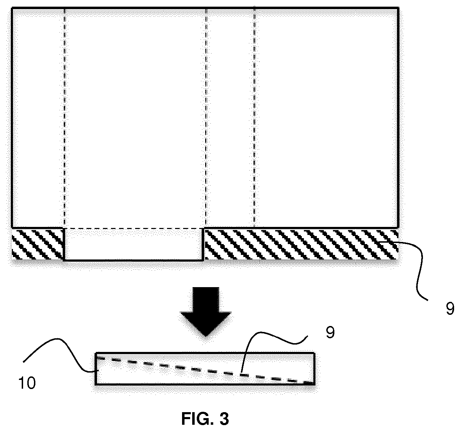

Fig. 3 illustrates the insertion of remnant sheets 9 into a bend-formed load-bearing structure 10 as additional reinforcement and stiffener elements after cutting them out of the as-delivered rectangular flat metallic sheet.

## Claims

1. Method for manufacturing a load-bearing structure of a passenger car comprising using bend forming according to DIN 8586 as the forming procedure for ≥50% of the structure manufactured out of metallic flat materials having a thickness ≤6.0 mm whereby load-bearing structure is defined as a land-based automotive vehicle or attached or pulled structure of it and whereby bend forming is carried out as a multi-edged forming process for ≥50% of the metallic flat materials on ≥2 edges per sheet of flat material,
**characterized in that** the metallic flat material is a high strength steel with a yield strength R_{p0.2} ≥ 400MPa and a bending angle α ≥ 90° at the same time.

2. Method for manufacturing a load-bearing structure of a passenger car according to the claim 1, **characterized in that** the load-bearing structure that is used is metallic flat material and have a thickness ≤ 3.0mm.

3. Method for manufacturing a load-bearing structure of a passenger car according to any of the preceding claims, **characterized in that** the as-delivered condition of the used metallic flat material before a necessary preparatory cutting step and the following bend forming step is a coil, a strip, a plate, a sheet, a blank, a contoured or shaped sheet, or a panel.

4. Method for manufacturing a load-bearing structure of a passenger car according to any of the preceding claims, **characterized in that** the load-bearing structure is used with a blank metallic surface without an additional painting or cathodic dip coating.

5. Method for manufacturing a load-bearing structure of a passenger car according to any of claims 1 - 3, **characterized in that** the metallic flat material is a stainless steel, preferably a cold-hardened stainless steel.

6. Method for manufacturing a load-bearing structure of a passenger car according to any of claims 1 - 3, **characterized in that** the metallic flat material is a flexible rolled or a tailored welded product.

7. Method for manufacturing a load-bearing structure of a passenger car according to any of claims 1 - 3, **characterized in that** the metallic flat material is hot-formed and manufactured by bend forming after it.

8. Use of a load-bearing structure in one of the vehicles of group: a passenger car, a passenger transportation vehicle like a car, a bus, a taxi or a people mover, a battery electric vehicle (BEV), a fuel cell vehicle (FCV) including also hybrid versions, is a land-based freight transport vehicle like vans, pick-ups, post office vehicles, last-mile transportation vehicles or vehicle bodies for platform trucks, wherein the load bearing structure has bends formed according to DIN 8586 for ≥50% of the structure manufactured out of metallic flat materials having a thickness ≤6.0 mm, whereby load-bearing structure is defined as a land-based automotive vehicle or attached or pulled structure of it and whereby bend forming is carried out as a multi-edged forming process for ≥50% of the metallic flat materials on ≥2 edges per sheet of flat material,
**characterized in that** the metallic flat material is a high strength steel with a yield strength R_{p0.2} ≥ 400MPa and a bending angle α ≥ 90° at the same time.

## Patentansprüche

1. Verfahren zur Herstellung einer Tragstruktur eines Personenkraftwagens, das eine Verwendung von Biegeumformen gemäß DIN 8586 als Umformvorgang für ≥50 % der Struktur, die aus metallischen flachen Materialien mit einer Dicke von ≤6,0 mm hergestellt ist, umfasst, wobei die Tragstruktur definiert ist als ein landgebundenes Kraftfahrzeug oder eine daran angebrachte oder gezogene Struktur, und wobei das Biegeumformen als ein mehrkantiger Umformungsprozess für ≥50 % der metallischen flachen Materialien an ≥2 Kanten pro Lage flachen Materials durchgeführt wird, **dadurch gekennzeichnet, dass** das metallische flache Material ein hochfester Stahl mit einer Dehngrenze R_{p0,2} ≥ 400 MPa und einem gleichzeitigen Biegewinkel α ≥ 90° ist.

2. Verfahren zur Herstellung einer Tragstruktur eines Personenkraftwagens nach Anspruch 1, **dadurch gekennzeichnet, dass** die Tragstruktur, die verwendet wird, ein metallisches flaches Material ist und eine Dicke ≤ 3,0 mm aufweist.

3. Verfahren zur Herstellung einer Tragstruktur eines Personenkraftwagens nach einem der vorhergehenden Ansprüche, **dadurch gekennzeichnet, dass** der Anlieferungszustand des verwendeten metallischen flachen Materials vor einem erforderlichen vorbereitenden Schneideschritt und dem nachfolgenden Biegeumformungsschritt eine Rolle, ein Streifen, eine Platte, ein Blech, ein Rohling, ein profiliertes oder geformtes Blech oder ein Paneel ist.

4. Verfahren zur Herstellung einer Tragstruktur eines Personenkraftwagens nach einem der vorhergehenden Ansprüche, **dadurch gekennzeichnet, dass** die Tragstruktur mit einer blanken metallischen Oberfläche ohne zusätzliche Lackierung oder kathodische Tauchbeschichtung verwendet wird.

5. Verfahren zur Herstellung einer Tragstruktur eines Personenkraftwagens nach einem der Ansprüche 1-3, **dadurch gekennzeichnet, dass** das metallische flache Material ein nichtrostender Stahl, vorzugsweise ein kaltgehärteter nichtrostender Stahl, ist.

6. Verfahren zur Herstellung einer Tragstruktur eines Personenkraftwagens nach einem der Ansprüche 1-3, **dadurch gekennzeichnet, dass** das metallische flache Material ein flexibles gewalztes oder ein zugeschnittenes geschweißtes Produkt ist.

7. Verfahren zur Herstellung einer Tragstruktur eines Personenkraftwagens nach einem der Ansprüche 1-3, **dadurch gekennzeichnet, dass** das metallische flache Material warmgeformt und durch anschließendes Biegeumformen hergestellt ist.

8. Verwendung einer Tragstruktur in einem der Fahrzeuge folgender Gruppe: einem Personenkraftwagen, einem Fahrgasttransportfahrzeug wie ein Auto, ein Bus, ein Taxi oder ein Peoplemover, einem batterieelektrischen Fahrzeug (BEV), einem Brennstoffzellenfahrzeug (FCV), einschließlich auch Hybridversionen, in einem landgebundenen Gütertransportfahrzeug wie einem Kleinlaster, Pick-ups, Postfahrzeugen, Transportfahrzeugen für die letzte Meile oder Fahrzeugaufbauten für Pritschenwagen, wobei die Tragstruktur Biegungen aufweist, die gemäß DIN 8586 für ≥50 % der Struktur, die aus metallischen flachen Materialien, die eine Dicke von ≤6,0 mm aufweisen, hergestellt ist, wobei eine Tragstruktur definiert ist als ein landgebundenes Kraftfahrzeug oder eine daran angebrachte oder davon gezogene Struktur, und wobei das Biegeumformen als ein mehrkantiger Umformungsprozess für ≥50 % der metallischen flachen Materialien an ≥2 Kanten pro Lage flachen Materials durchgeführt wird,
**dadurch gekennzeichnet, dass** das metallische flache Material ein hochfester Stahl mit einer Dehngrenze R_{p0,2} ≥ 400 MPa und einem gleichzeitigen Biegewinkel α ≥ 90° ist.

## Revendications

1. Procédé de fabrication d'une structure porteuse d'une voiture de tourisme comprenant l'utilisation d'un cintrage selon DIN 8586 comme procédure de formage pour ≥ 50 % de la structure fabriquée à partir de matériaux plats métalliques ayant une épaisseur ≤ 6,0 mm, moyennant quoi la structure porteuse est définie en tant que véhicule automobile terrestre ou structure attachée ou tirée de celui-ci et dans lequel le cintrage est effectué comme un processus de formage à plusieurs bords pour ≥ 50 % des matériaux plats métalliques sur ≥ 2 bords par feuille de matériau plat,
**caractérisé en ce que** le matériau plat métallique est un acier à haute résistance avec une limite d'élasticité R_{p0,2} ≥ 400MPa et un angle de flexion α ≥ 90° en même temps.

2. Procédé de fabrication d'une structure porteuse d'une voiture de tourisme selon la revendication 1, **caractérisé en ce que** la structure porteuse utilisée est en matériau métallique plat et a une épaisseur ≤ 3.0mm.

3. Procédé de fabrication d'une structure porteuse d'une voiture de tourisme selon une quelconque des revendications précédentes, **caractérisé en ce que** l'état à la livraison du matériau plat métallique utilisé avant une étape préparatoire nécessaire de découpe et l'étape suivante de cintrage est une bobine, une bande, une plaque, une feuille, un flan, une feuille profilée ou façonnée, ou un panneau.

4. Procédé de fabrication d'une structure porteuse d'une voiture de tourisme selon une quelconque des revendications précédentes, **caractérisé en ce que** la structure porteuse est utilisée avec une surface métallique vierge sans peinture supplémentaire ni revêtement par immersion cathodique.

5. Procédé de fabrication d'une structure porteuse d'une voiture particulière selon une quelconque des revendications 1-3, **caractérisé en ce que** le matériau métallique plat est un acier inoxydable, de préférence un acier inoxydable trempé à froid.

6. Procédé de fabrication d'une structure porteuse d'une voiture de tourisme selon une quelconque des revendications 1 à 3, **caractérisé en ce que** le matériau plat métallique est un produit laminé flexible ou un produit soudé sur mesure.

7. Procédé de fabrication d'une structure porteuse d'une voiture de tourisme selon une quelconque des revendications 1 à 3, **caractérisé en ce que** le matériau plat métallique est formé à chaud et fabriqué par cintrage après celui-ci.

8. Utilisation d'une structure porteuse dans un des véhicules du groupe : une voiture de tourisme, un véhicule de transport de personnes comme une voiture, un bus, un taxi ou un monospace, un véhicule électrique à batterie (BEV), un véhicule à pile à combustible (FCV), y compris les versions hybrides, est un véhicule de transport terrestre de marchandises comme les fourgons, les pick-ups, les véhicules postaux, les véhicules de transport du dernier kilomètre ou les carrosseries de camions à plate-forme, dans lequel la structure porteuse présente des courbures formées selon la norme DIN 8586 pour ≥ 50 % de la structure fabriquée à partir de matériaux métalliques plats ayant une épaisseur ≤ 6,0 mm, moyennant quoi la structure porteuse est définie comme un véhicule automobile terrestre ou une structure attachée ou tirée de celui-ci et moyennant quoi la formation de courbure est réalisée comme un procédé de formage à bords multiples pour ≥ 50 % des matériaux plats métalliques sur ≥ 2 bords par feuille de matériau plat,
**caractérisé en ce que** le matériau plat métallique est un acier à haute résistance avec une limite d'élasticité R_{p0,2} ≥ 400MPa et un angle de flexion α ≥ 90° en même temps.
